(19) Europäisches Patentamt
European Patent Office
Office européen des brevets

(11) **EP 2 884 238 A1**

(12) **EUROPÄISCHE PATENTANMELDUNG**

(43) Veröffentlichungstag:
**17.06.2015 Patentblatt 2015/25**

(51) Int Cl.:
***G01D 5/20*** *(2006.01)*

(21) Anmeldenummer: **14197736.3**

(22) Anmeldetag: **12.12.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **13.12.2013 DE 102013225918**

(71) Anmelder: **Continental Teves AG & Co. oHG 60488 Frankfurt (DE)**

(72) Erfinder:
• **Schirling, Andreas 64285 Darmstadt (DE)**
• **Schräbler, Sighard 61184 Karben (DE)**
• **Stauder, Peter 55128 Mainz (DE)**
• **Stählin, Ulrich 65760 Eschborn (DE)**
• **Horn, Rainer 65817 Eppstein (DE)**

(54) **Induktiver Drehwinkelsensor mit einer kreissegmentförmigen Erreger- und Empfangsspule**

(57)     Drehwinkelsensor (2) zum Erfassen der Position eines rotierenden Elements, insbesondere Rotors eines elektrischen Motors, aufweisend:
- eine Erregerspule (20), welche mit einer Wechselspannung (U~) versorgt wird, um ein zur Wechselspannung (U~) korrespondierendes Erregerfeld zu erzeugen,
- mindestens zwei Empfangsspulen (40a, 40b, 240a, 240b, 340a, 340b), die mit der Erregerspule (20) derart gekoppelt sind, so dass das Erregerfeld in den Empfangsspulen (40a, 40b, 240a, 240b, 340a, 340b) jeweils eine Spannung (Uout1, Uout2) induziert, und
- ein Winkelgebereinheit (30), das mit dem rotierenden Element verbindbar ist und mittels dessen die Spannung der Empfangsspulen (40a, 40b, 240a, 240b, 340a, 340b) beeinflussbar ist,

dadurch gekennzeichnet, dass die Erregerspule (20) und die Empfangsspulen (40a, 40b, 240a, 240b, 340a, 340b) entlang eines Kreissegment angeordnet sind.

Fig. 2

**Beschreibung**

Die Erfindung betrifft einen Drehwinkelsensor zum Erfassen des Drehwinkels eines rotierenden Elements gemäß dem Oberbegriff des Anspruchs 1.

Aus der EP 1 828 722 B1 ist ein induktiver Positionsdetektor mit einer ersten induktiven Einrichtung und einer zweiten induktiven Einrichtung bekannt, wobei die erste induktive Einrichtung einen passiven Resonanzkreis umfasst und die zweite induktive Einrichtung die Messstrecke definiert und mindestens zwei Empfangswindungen umfasst. Die zweite induktive Einrichtung ist so konfiguriert, dass sie im Gebrauch einen Wechselstrom in dem passiven Resonanzkreis induziert, sodass der in dem passiven Resonanzkreis induzierte Wechselstrom infolge der gegenseitigen Induktivität zwischen den Empfangswindungen und dem passiven Resonanzkreis ein Wechselsignal in jeder Empfangswindung induziert, wobei diese Signale bezeichnend sind für die Position der ersten induktiven Einrichtung auf der Messstrecke. Aus dieser Druckschrift ist es zwar bekannt, dass Prinzip des Positionsdetektors im Allgemeinen zur Messung eines Drehwinkel anzuwenden. Es wird jedoch nicht offenbart, wie eine solche Ausführungsform konkret aussehen könnte. Für Anwendungen in der Automobilindustrie hat sich zudem herausgestellt, dass aufgrund begrenzter Bauraumbedingungen eine Anpassung der bekannten Konzepte notwendig ist.

Davon ausgehend liegt der Erfindung daher die Aufgabe zu Grunde, einen Drehwinkelsensor zum erfassen des Drehwinkel eines rotierenden Elements aufzuzeigen, der möglichst kompakt ausführbar ist.

Die Aufgabe wird durch die Merkmale des unabhängigen Anspruchs gelöst. Bevorzugte Ausführungsformen sind Gegenstand der abhängigen Ansprüche.

Der Erfindung liegt der Grundgedanke zu Grunde, den Bauraum durch die Ausführung der Empfangsspulen entlang eines Kreissegments zu verringern. Zum Messen eines Drehwinkels des rotierenden Elements wird daher nicht ein voller Kreisumfang zum Einbau der Empfangsspule benötigt. Stattdessen erstreckt sich die Empfangsspule lediglich sich über einen Teil eines Kreisumfangs bzw. über ein Kreissegment. Damit kann die Empfangsspule sehr kompakt ausgeführt werden und leichter in kleine Bauräume, beispielsweise an einem Motor, integriert werden. Vorteilhaft ist es zwei oder mehr Empfangsspulen zu verwenden. In der nachfolgenden Beschreibung wird daher auf mehrere Empfangsspulen Bezug genommen. Nachfolgende Ausführungsformen können im Prinzip auch mit einer Empfangsspule ausgeführt werden.

Ein weiterer Vorteil der Erfindung liegt darin, dass das Kreissegment mit den Empfangsspulen relativ zum gesamten Kreisumfang variabel positioniert war ist. Es kann an irgendeinem Teilbereich eines Kreisumfangs angeordnet werden. Die Erregerspule, die ist ebenfalls auf einem Kreissegment ausgeführt. Die Einheit aus den Empfangsspulen und der Erregerspule nehmen daher beide nur den Raum auf einem Kreissegment ein.

Die Winkelgebereinheit ist mit dem rotierenden Element, beispielsweise eine Welle, verbunden und gibt die Bewegung des rotierenden Elements wieder. Durch das Erfassen der absoluten Position oder der relativen Bewegung des rotierenden Elements zu den Empfangsspulen kann der Drehwinkel des rotierenden Elements mittels der Winkelgebereinheit entweder relativ zu den Empfangsspulen oder absolut in Bezug auf einen Bezugspunkt erfasst werden. Die Winkelgebereinheit ist ein von der Erregerspule und den Empfangsspulen separates Teil, das bspw. parallel benachbart zu den Spulen angeordnet ist.

Eine vorteilhafte Ausführungsform des erfindungsgemäßen Drehwinkelsensors ist derart ausgebildet, dass sich das Kreissegment im Wesentlichen über einen Winkel von etwa 360°/ (2*n), insbesondere 45°, erstreckt, wobei n eine gerade Zahl ist. Die Ausführungsform ist besonders vorteilhaft zur Verwendung in Kombination mit einem elektrischen Motor, der mehrere Polpaare besitzt. Hier kann statt 2*n die Anzahl der Polpaare eingesetzt werden. Bei einem achtpoligen Motor beispielsweise ist es ausreichend, die Erregerspule und die Empfangsspulen über ein Kreissegment anzuordnen, das sich über 45° erstreckt.

Eine vorteilhafte Ausführungsform des erfindungsgemäßen Drehwinkelsensors ist derart ausgebildet, dass jede Empfangsspule eine Wicklung aufweist, die einen periodischen Verlauf aufweist. Die Wicklungen der Empfangsspulen sind dabei Phasen verschoben zueinander angeordnet.

Eine vorteilhafte Ausführungsform des erfindungsgemäßen Drehwinkelsensors ist derart ausgebildet, dass die Wicklung mehrere Wicklungsabschnitte aufweist, die jeweils ein von Wicklungsabschnitten eingegrenztes Messfeld definieren. Die Messfelder definieren einzelne in sich im Wesentlichen geschlossene Bereiche. Die Grenzen eines solchen Bereiches werden durch die jeweiligen Wicklungsabschnitte definiert.

Eine vorteilhafte Ausführungsform des erfindungsgemäßen Drehwinkelsensors ist derart ausgebildet, dass die Messfelder um einen gemeinsamen Rotationspunkt gleichmäßig beabstandet angeordnet sind.

Eine vorteilhafte Ausführungsform des erfindungsgemäßen Drehwinkelsensors ist derart ausgebildet, dass die Wicklung einen im Wesentlichen dreiecks- oder trapezförmigen Verlauf aufweist. Mit dieser Form der Empfangsspulen konnte bei Versuchen eine besonders gute Signalgüte der von den Empfangsspulen ausgegebenen Spannungen erreicht werden. Ferner ermöglicht diese Form eine besonders einfache Herstellung der Empfangsspulen.

Eine vorteilhafte Ausführungsform des erfindungsgemäßen Drehwinkelsensors ist derart ausgebildet, dass jede Empfangsspule Wicklungsabschnitte aufweist, die in unterschiedlichen Ebenen angeordnet sind.

Es ist besonders vorteilhaft den erfindungsgemäßen Drehwinkelsensors derart weiterzubilden, dass die Wicklungsabschnitte der Empfangsspulen im Wesentlichen gleichmäßig auf zwei Ebenen verteilt angeordnet sind. Die Winkelgebereinheit ist üblicherweise parallel zu den Empfangsspulen angeordnet. Mit dieser Ausführungsform wird erreicht, dass die Wicklungsabschnitte der Empfangsspulen jeweils abwechselnd mit einem größeren und einem kleineren Abstand zu der Winkelgebereinheit angeordnet sind. Die Abstandsverteilung von den Wicklungen der Empfangsspulen zu der Winkelgebereinheit wird dadurch gleichmäßig aufgeteilt. Dadurch wird mit beiden Empfangsspulen eine qualitativ gleichwertige Signalgüte erreicht.

Eine vorteilhafte Ausführungsform des erfindungsgemäßen Drehwinkelsensors ist derart ausgebildet, dass die Erregerspule und die Empfangsspulen auf einem Trägerkörper angeordnet sind, der kreissegmentförmig ausgebildet ist. Der Trägerkörper kann beispielsweise als eine Leiterplatine ausgebildet sein.

Eine vorteilhafte Ausführungsform des erfindungsgemäßen Drehwinkelsensors ist derart ausgebildet, dass der Trägerkörper ringförmig ausgebildet ist. Diese Ausführungsform ermöglicht insbesondere in Zusammenhang mit einem kreissegmentförmig ausgebildeten Trägerkörper eine besonders kompakte Bauweise der Empfangsspulen und der Erregerspule.

Eine vorteilhafte Ausführungsform des erfindungsgemäßen Drehwinkelsensors ist derart ausgebildet, dass die Winkelgebereinheit einen elektronischen Schwingkreis mit mindestens einem kapazitiven und mindestens einem induktiven Element aufweist.

Eine vorteilhafte Ausführungsform des erfindungsgemäßen Drehwinkelsensors ist derart ausgebildet, dass das kapazitive Element ein Kondensator und / oder das induktive Element ein Stromleiter ist. Der Kondensator und das induktive Element können als auf eine Leiterplatine aufgedruckte Leiter oder Leiterbahnen ausgeführt sein. Dies ermöglicht, insbesondere im Zusammenhang mit einem ringförmigen Trägerkörper der Winkelgebereinheit, eine besonders variable Ausnutzung der Anbringfläche auf dem Trägerkörper. Zudem kann die Form der Schwingkreise variabel an den jeweiligen Bedarf angepasst werden.

Eine vorteilhafte Ausführungsform des erfindungsgemäßen Drehwinkelsensors ist derart ausgebildet, dass die Winkelgebereinheit eine Vielzahl von Schwingkreisen aufweist.

Eine vorteilhafte Ausführungsform des erfindungsgemäßen Drehwinkelsensors ist derart ausgebildet, dass die Anzahl m der Schwingkreise gleich

$$m = 360° / alpha$$

ist, wobei alpha der Winkel ist, über den sich das Kreissegment der Erregerspule bzw. Empfangsspulen erstrecken. Die Ausführungsform ist insbesondere dann sinnvoll, wenn die Sensorsignale des Drehwinkelsensors zum Steuern eines elektrischen Motors verwendet werden, bspw. eines bürstenlosen Gleichstrommotors.

Eine vorteilhafte Ausführungsform des erfindungsgemäßen Drehwinkelsensors ist derart ausgebildet, dass jeder Schwingkreis eine eigene Eigenfrequenz aufweist. Mittels der Eigenfrequenz ist es möglich, jeden Schwingkreis zu identifizieren, sobald es sich innerhalb des Kreissegments der Empfangsspulen befindet. So ist es möglich, den absoluten Drehwinkel des rotierenden Elements bzw. der Winkelgebereinheit zu erfassen. Im einfachsten Fall weisen alle Schwingkreise dieselbe Eigenfrequenz auf.

Eine vorteilhafte Ausführungsform des erfindungsgemäßen Drehwinkelsensors ist derart ausgebildet, dass die Erregerfrequenz bzw. die Frequenz der Wechselspannung in Abhängigkeit der Eigenfrequenz eines Schwingkreises oder eines der Schwingkreise festgelegt wird. Durch das Einstellen der Erregerfrequenz entsprechend zur Eigenfrequenz eines Schwingkreises oder der Schwingkreise ist es möglich, den Drehwinkel eines speziellen Schwingkreises zu erfassen. Durch abwechselnde Erregerfrequenzen kann der Drehwinkel mehrerer Schwingkreise gezielt erfasst werden. Auf diese Weise können die Empfangsspulen bspw. speziell auf diejenigen Schwingkreise eingestellt werden, die sich innerhalb des Kreissegments der Empfangsspulen befinden.

Eine vorteilhafte Ausführungsform des erfindungsgemäßen Drehwinkelsensors ist derart ausgebildet, dass die Winkelgebereinheit einen Trägerkörper aufweist und die Schwingkreise gleichmäßig um einen Rotationspunkt herum angeordnet sind.

Eine vorteilhafte Ausführungsform des erfindungsgemäßen Drehwinkelsensors ist derart ausgebildet, dass der Schwingkreis oder die Schwingkreise innerhalb eines ringförmigen Bereichs des Trägerkörpers angeordnet ist / sind. Auf diese Weise kann die Winkelgebereinheit an unterschiedliche Formen des rotierenden Elements angepasst werden. Insbesondere kann die Winkelgebereinheit auch mit einer Welle mit einem größeren Durchmesser verwendet werden.

Die Erfindung umfasst ferner einen elektrischen Motor, insbesondere einen bürstenlosen Gleichstrommotor, mit einem Drehwinkelsensor nach einem der vorstehenden Ausführungsformen.

Die Erfindung wird nachfolgend anhand eines Ausführungsbeispiels und Figuren näher beschrieben. Es zeigen:

Fig. 1    eine schematische Schaltungsanordnung mit einem ersten Ausführungsbeispiel des erfindungsgemäßen Drehwinkelsensors,

Fig. 2    eine schematische Darstellung der Erregerspule und der Empfangsspulen gemäß dem ersten Ausführungsbeispiels,

Fig. 3       eine schematische Darstellung der Winkelge-
             bereinheit gemäß dem ersten Ausführungs-
             beispiel,

Fig. 4a      eine schematische Darstellung eines Ausschnitts der Erregerspule und der Empfangs-
             spulen gemäß einem zweiten Ausführungs-
             beispiel,

Fig. 4b      eine vergrößerte Darstellung einer einzelnen
             Wicklung einer Empfangsspule aus Figur 4a,

Fig. 5       eine schematische seitliche Teilansicht der
             Empfangsspule neben einer Winkelgebereinheit, und

Fig. 6       eine alternative Wicklungsform der Empfangsspulen gemäß einem dritten Ausführungsbeispiel.

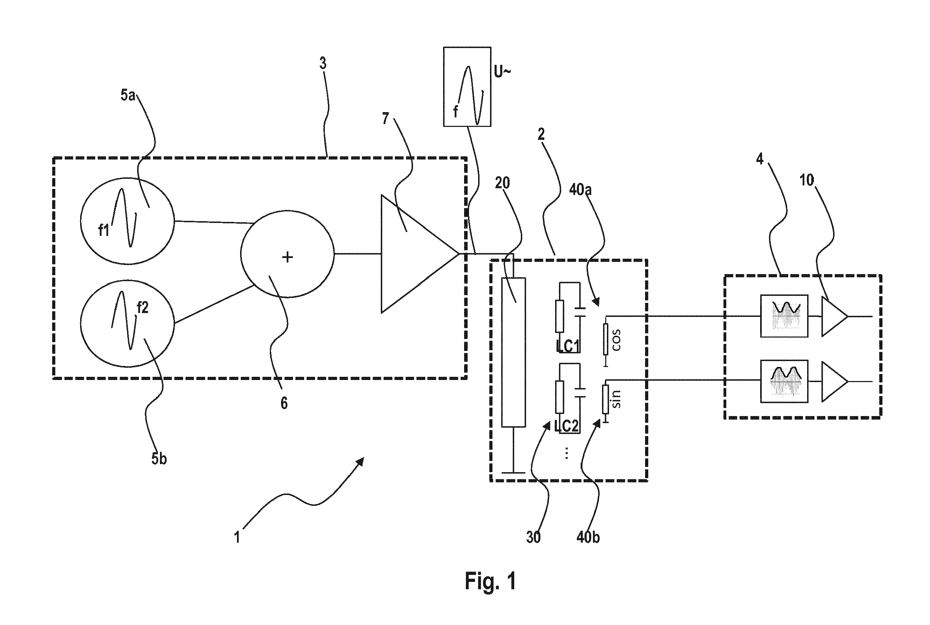

Figur 1 zeigt eine Schaltungsanordnung 1 mit einem ersten Ausführungsbeispiel des erfindungsgemäßen Drehwinkelsensors 2 in einer schematischen Darstellung. Die Schaltungsanordnung weist eine Spannungsquelle 3, den Drehwinkelsensor 2 sowie eine Auswerteeinheit 4 auf. Die Anordnung kann beispielsweise in einem elektrischen Motor, z. B. Gleichstrommotor, eingebaut sein.

Die Spannungsquelle 3 ist mit der Erregerspule 20 elektrisch verbunden und versorgt diese mit einer Wechselspannung $U\sim$ zum erzeugen eines zur Wechselspannung $U\sim$ korrespondierenden Erregerfeldes. Die Wechselspannung $U\sim$ weist eine Spannungsfrequenz auf $f$, die variabel einstellbar ist und in unterschiedliche Spannungsfrequenzen bzw. Frequenzen einstellbar ist. Die Wechselspannung kann beispielsweise abwechselnd in unterschiedliche Frequenzen eingestellt werden. Dies kann derart erfolgen, dass die Spannungsfrequenz $f$ mittels Addition mehrerer Spannungsfrequenzen $f_1$, $f_2$ eingestellt wird. Hierzu weist die Spannungsquelle 3 zunächst zwei Wechselspannungserzeuger 5a und 5b auf, die jeweils eine Wechselspannung in unterschiedlichen Frequenzen $f_1$, $f_2$ erzeugen. Diese Ausgestaltung hat den Vorteil, dass die Wechselspannung $U\sim$ leicht durch Variierung der Summenteile veränderbar ist. Die Ausgangssignale der Spannungserzeuger 5a und 5b werden einem Addierer 6 zugeführt. Die Summe der Ausgangssignale werden einer Treibereinheit 7 zugeführt, der aus diesem Signal die Wechselspannung $U\sim$ erzeugt und diese der Erregerspule 20 zuführt. Es ist jedoch auch denkbar andere bereits bekannte Lösungen zur Erzeugung einer Wechselspannung in unterschiedlichen Frequenzen zu verwenden.

Der Drehwinkelsensor 2 umfasst im Wesentlichen die Erregerspule 20, eine Winkelgebereinheit 30 und zwei Empfangsspulen 40a, 40b. In Figur 1 ist die Anordnung der Erregerspule 20, der Winkelgebereinheit 30 und der Empfangsspulen 40a, 40b schematisch dargestellt. In einer bevorzugten Anordnung sind die Empfangsspulen und die Erregerspule auf einem Trägerkörper angeordnet und die Winkelgebereinheit parallel benachbart zu den Spulen bzw. deren Trägerkörper angeordnet. Dies gilt auch für die nachfolgenden Ausführungsbeispiele entsprechend.

Die Erregerspule 20 ist vorzugsweise als eine auf einer Leiterplatine aufgedruckte Leiterbahn ausgebildet und um die Empfangsspulen 40a, 40b herum angeordnet, so dass das durch die Wechselspannung erzeugte Erregerfeld eine Spannung in den Empfangsspulen 40a, 40b induziert. Die Erregerspule 20 weist eine Wicklung 21 auf, die einen sich über einen Kreissegment erstreckt. In diesem Ausführungsbeispiel umfasst das Kreissegment im Wesentlichen einen Winkel von alpha=90°. Leichte Abweichungen sind möglich. Die Wicklung 21 ist über zwei Bahnen gewickelt, wobei die Anschlusspunkte 22 außen angeordnet sind. Die Erregerspule 20 ist über die Anschlusspunkte 22 mit der Spannungsquelle 3 verbunden. In radialer Errichtung weist die Erregerspule 20 jeweils eine geradlinige Begrenzung 25a, 25b auf, die mit zwei kreisbogenförmigen Abschnitten 26a, 26b einen Bereich eingrenzen, in der die Empfangsspulen 40a, 40b angeordnet sind. Auf diese Weise wird sichergestellt, dass die Empfangsspulen 40a, 40b mit der Erregerspule 20 induktiv gekoppelt sind.

Die Empfangsspulen 40a, 40b weisen jeweils eine Wicklung 43a, 43b auf. Die Wicklungen 43a, 43b haben einen sinus- bzw. kosinusförmigen Verlauf. Denkbar sind auch andere periodische Formen, wie in den anderen Ausführungsbeispielen gezeigt. Die Wicklungen 43a, 43b haben einen Anfangspunkt 41a, 41b, die an einem Ende des Kreissegments angeordnet sind. Die Wicklungen 43a, 43b laufen von dort entsprechend ihrer periodischer Form entlang des Kreissegments bis zum anderen Ende des Kreissegments. Es ist vorteilhaft die Wicklungen 43a, 43b der Empfangsspulen 40a, 40b mit einem Abstand von dem Endabschnitt der Erregerspule 20 zu versehen, da ansonsten die Messgenauigkeit in diesem Bereich beeinträchtigt werden kann. Es hat sich als vorteilhaft herausgestellt einen Abstand einzuhalten, der in etwa dem Radius der Erregerspule entspricht. Von dem anderen Ende laufen die Wicklungen 43a, 43b wie eine reflektierte Welle zum ersten Ende des Kreissegments zurück. Vorzugsweise ist die Periodenlänge der Wicklungen derart ausgeführt, dass ein ganzzahliges Vielfaches der Periode innerhalb des Kreissegments hineinpasst, wie im Falle der Empfangsspule 40a. Andernfalls wird das, wie im Falle der Empfangsspule 40b, die Wicklung 43b über einen im Wesentlichen Abschnitt im Wesentlichen entlang der Wicklung der Erregerspule 20 nach innen geführt. Von dort aus verläuft die Wicklung 43b nach der vorgegebenen periodischen Form. Das Ende der Wicklung 43a, 43b bildet jeweils ein Endpunkt 42a, 42b. Über die Anfangs- und Endpunkte 41a, 42a, 41b, 42b wird die Ausgasspannung $U_{out1}\sim$, $U_{out2}\sim$ von den Empfangsspulen abgegriffen.

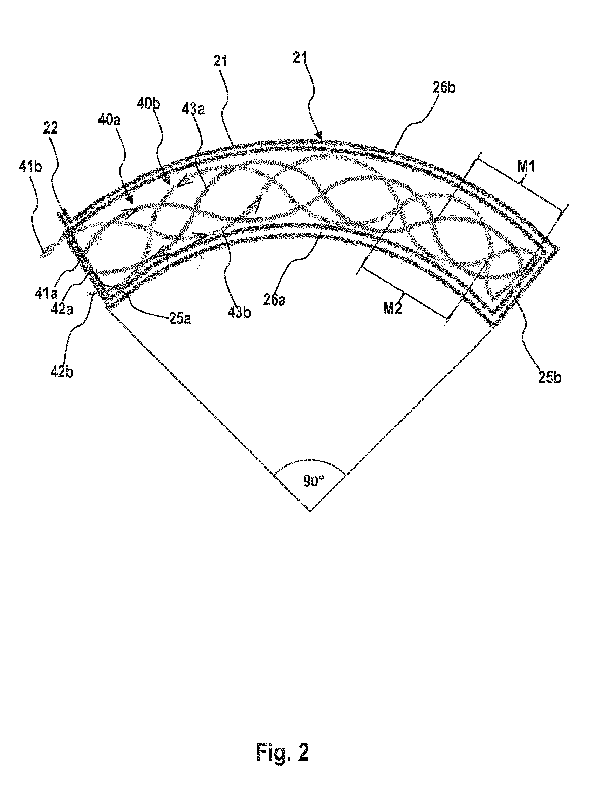

Die Empfangsspulen 40a, 40b weisen mehrere Messfelder auf, in Figur 2 exemplarisch mit M1, M2 gekennzeichnet. Die Messfelder haben entsprechend der Laufrichtung der Wicklungen 43a, 43b jeweils eine Wicklungsrichtung. In Figur 2 sind die Wicklung Richtungen durch die Pfeilspitzen auf den Wicklungen gekennzeichnet.

Die Erregerspule 20 und die Empfangsspulen 40a, 40b sind vorzugsweise auf einer Leiterplatine mittels aufgedruckten Leiterbahnen ausgebildet. Der Trägerkörper, in dem Fall die Leiterplatine, ist kreissegmentförmig ausgebildet. Vorteilhafterweise nicht wesentlich größer, das der Bereich, den die Erregerspule 20 einnimmt.

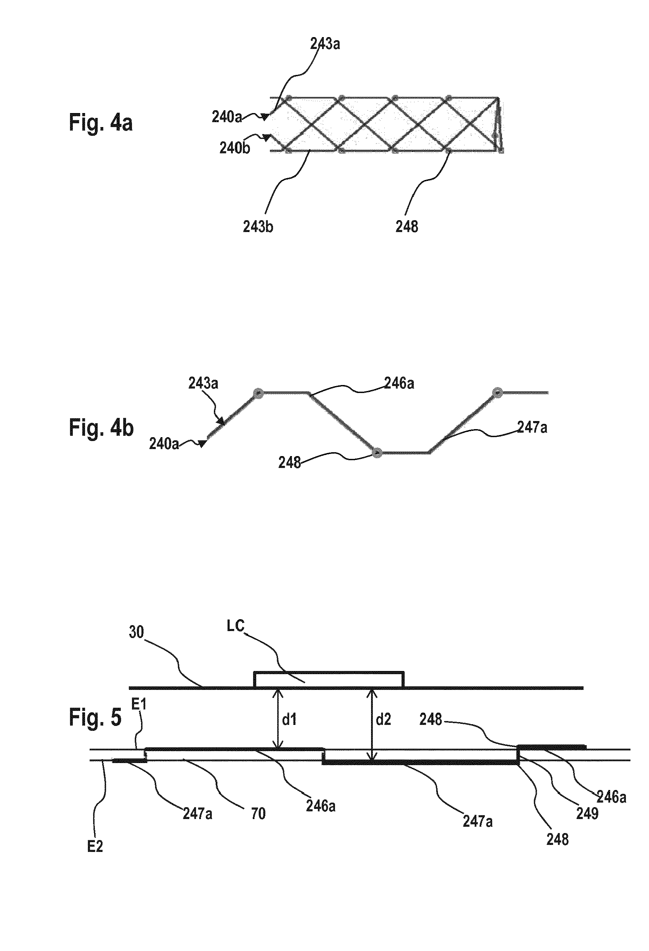

Aufgrund der induktiven Kopplung mit der Erregerspule 20 erzeugen die zwei Empfangsspulen 40a, 40b (es können auch mehr sein) jeweils eine Ausgangsspannung Uout1, Uout2 (vgl. Fig. 1), die eine sinusförmige bzw. kosinusförmige Form aufweisen können. Die Spannungen Uout1, Uout2 variieren, sobald die Winkelgebereinheit 30 eines der Messfelder M1, M2 der Empfangsspulen 40a, 40b überdeckt, wie in Figur 5 schematisch dargestellt.

Die Auswerteeinheit 4 ist mit den Empfangsspulen 40a, 40b verbunden und wertet die Ausgangsspannungen Uout1, Uout2 der Empfangsspulen 40a, 40b aus. Die Ausgangsspannungen Uout1, Uout2 der Empfangsspulen 40a, 40b werden mittels Demodulatoren 10 verarbeitet. Als Ausgangsspannung wird in der Regel ein sinus- oder kosinusförmiger Spannungsverlauf ausgegeben. Die Amplitude und Frequenz der Ausgangsspannungen gibt Ausschluss über die zumindest relative Winkelposition der Winkelgebereinheit 30 bzw. des rotierenden Elements.

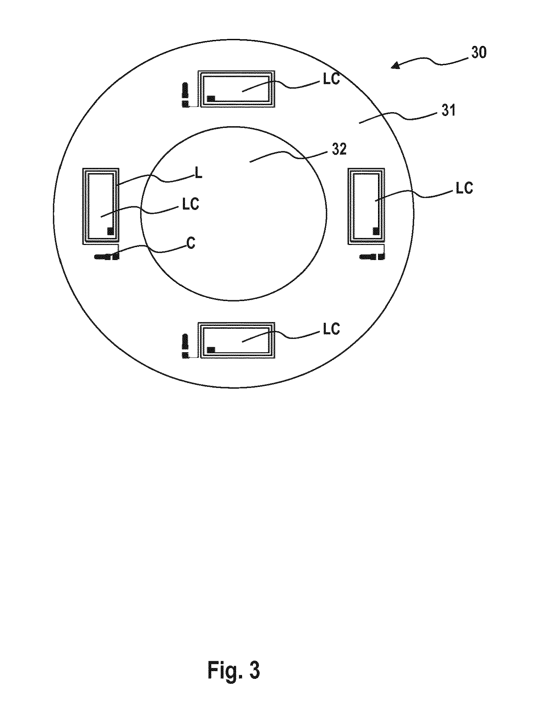

In Figur 3 ist ein Ausführungsbeispiel der Winkelgebereinheit 30 gezeigt. Die Winkelgebereinheit 30 ist mit einem rotierenden Element verbunden und verändert ihre relative Position zu den Empfangsspulen 40a, 40b durch die Bewegung des rotierenden Elements.

Die Winkelgebereinheit 30 weist einen Trägerkörper 31 auf, der beispielsweise als eine Leiterplatine ausgeführt sein kann. Der Trägerkörper 31 ist ringförmig ausgebildet. In der Mitte weist der Trägerkörper 31 eine Ausnehmung 32 auf, durch die das rotierende Element durchführbar ist.

Auf einer Fläche des Trägerkörpers 31 sind mehrere Schwingkreise LC innerhalb des ringförmigen Bereichs angeordnet. Bei den Schwingkreisen handelt es sich um elektromagnetische Schwingkreise LC mit einem Kondensator C und einem Stromleiter L als induktives Element. Der Schwingkreis LC kann mittels auf einer Leiterplatine aufgedruckten Leiterbahnen hergestellt werden. Es handelt sich vorzugsweise um einen passiven Schwingkreis LC, der eine eigene Eigenfrequenz aufweist. Die Eigenfrequenzen der Schwingkreise können sich voneinander unterscheiden. Vorzugsweise beträgt die Eigenfrequenz des Schwingkreis LC der Frequenz des Erregerfeldes bzw. der Wechselspannungsfrequenz f. Vorzugsweise sind die Schwingkreise LC um den Mittelpunkt des Trägerkörper herum gleichmäßig beabstandet angeordnet. In Figur 4 sind vier Schwingkreise LC jeweils um 90° versetzt zueinander angeordnet. Im Allgemeinen sollte die Anzahl m der Schwingkreise m betragen, wobei

$$m = 360° / alpha$$

ist, wobei alpha der Winkel ist, über den sich das Kreissegment der Erregerspule bzw. Empfangsspulen erstreckt.

Besonders vorteilhaft ist es, jeden Schwingkreis derart auszulegen, dass sich die Eigenfrequenz der Schwingkreise LC voneinander unterscheiden. Auf diese Weise ist mittels der Eigenfrequenzen jeder Schwingkreis eindeutig identifizierbar, so dass es möglich ist, die Position eines Schwingkreises relativ zu den Messfeldern eindeutig festzustellen. Vorteilhafterweise wird hierzu die Frequenz der Wechselspannung U~ abwechselnd, bspw. nacheinander in der Reihenfolge der Eigenfrequenzen der Schwingkreise LC eingestellt. Alternativ kann die Eigenfrequenz in Abhängigkeit der unterschiedlich einstellbaren Wechselspannungsfrequenzen f festgelegt werden.

Alternativ dazu können die Schwingkreise derart ausgelegt sein, dass sie dieselbe Eigenfrequenz aufweisen. In solch einem Fall kann der absolute Drehwinkel durch ein entsprechendes Zählen der Spannungsperioden der Empfangsspulen erfasst werden.

In den Figuren 4a, 4b ist ein zweites Ausführungsbeispiel gezeigt. Dieses Ausführungsbeispiel unterscheidet sich im Wesentlichen durch den Verlauf der Wicklung der Empfangsspulen. Die Figuren zeigen jeweils nur einen Ausschnitt der Empfangsspulen 240a, 240b und sind zur schematischen Darstellung geradförmig dargestellt. In der tatsächlichen Ausführung erstrecken sich die Empfangsspulen 240a, 240b und die Erregerspule 220 über ein Kreissegment.

Die Wicklungen 243a, 243b der Empfangsspulen 240a, 240b weisen eine im wesentlichen trapezförmige Form auf. Die trapezförmige Wicklung 243a, 243b ist, wie in Figur 4b anhand einer Empfangsspule 240a, 240b dargestellt, in mehrere Abschnitte 246a, 247b unterteilt. Die Abschnitte sind in unterschiedlichen Ebenen E1, E2 angeordnet. In Figur 5 ist dieses Merkmal in der seitlichen Ansicht schematisch dargestellt. Hier bilden die Vorder- und Rückseite des Trägerkörpers 270 die zwei Ebenen E1 und E1.

Ein Abschnitt 246a der Wicklung ist auf einer Seite des Trägerkörpers 270 angeordnet und der andere Abschnitt 247a ist auf der gegenüberliegenden Seite des Trägerkörpers 270 angeordnet. Die Verbindung der Wicklungsabschnitte 246a, 247a erfolgt durch den Trägerkörper 270 hindurch. Hierzu weisen die Wicklungsabschnitte jeweils Anschlusspunkte 248 auf, die mittels einer durch die Trägerkörper verlaufende Verbindung 249 miteinander verbunden sind.

In den Figuren 4b und 5 ist zur Veranschaulichung nur eine Wicklung einer Empfangsspule entsprechend der vorigen Beschreibung dargestellt. Vorzugsweise wird jede Empfangsspule mit Wicklungsabschnitten ausgeführt, die sich in zwei unterschiedlichen Ebenen befinden. Auf diese Weise wird erreicht, dass der Abstand der Empfangsspulen zu der Winkelgebereinheit bzw. der darauf angebrachten Schwingkreise in etwa gleichmäßig verteilt ist. D.h. dass jede Empfangsspule hat etwa gleich viele Wicklungsabschnitte mit einem kleinen Abstand d1 zu der Winkelgebereinheit und gleich viele Wicklungsabschnitte mit einem großen Abstand d2 zu der Winkelgebereinheit 30.

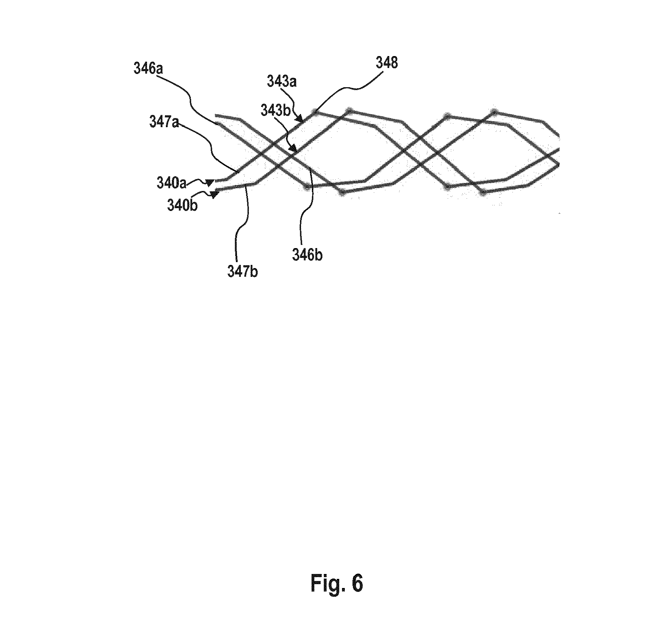

In Figur 6 ist ein weiteres Wicklungsmuster der Empfangsspulen 340a, 340b gemäß einem dritten Ausführungsbeispiel dargestellt. Die Wicklungen 343a, 343b sind mit einer kleinen Phasenverschiebung zueinander auf dem Trägerkörper aufgebracht. Die Wicklungen 343a, 343b verlaufen im Wesentlichen unmittelbar benachbart und parallel zueinander. Der Abstand kann je nach Anwendungsfall im Bereich einiger Millimeter liegen. Die Wicklungen 343a, 343b weisen ein trapezförmiges Grundmuster auf, wobei die Grundseiten des Trapezes zu den Schenkeln des Trapezes nach innen angewinkelt sind. Entsprechend zum zweiten Ausführungsbeispiel sind haben die Empfangsspulen 340a, 340b Wicklungsabschnitte 346a, 346b, 347a, 347b, die in zwei unterschiedlichen Ebenen angeordnet sind. Die jeweils parallel zueinander angeordneten Wicklungsabschnitte sind derweil auf derselben Ebene angeordnet. Auf diese Weise ist eine Überkreuzende Ausführung der Wicklung leicht umsetzbar.

Die hier genannten Muster aus den Figuren 4a, 4b und 5 haben sich in Versuchen als besonders vorteilhafte Ausführungsformen in Bezug auf die Signalgüte der Ausgangsspannung Uout1, Uout2 erwiesen. Darüber hinaus hat es sich herausgestellt, dass diese Muster besonders einfach herstellbar sind. Die Erfindung umfasst darüber hinaus auch weitere periodische Wicklungsmuster, die sich innerhalb eines Kreissegments abbilden lassen.

Die Erfindung ist nicht auf die vorgenannten Ausführungsbeispiele beschränkt. Die vorgenannten Ausführungsbeispiele der Erregerspule, Empfangsspulen sind mit den Ausführungsbeispielen der Winkelgebereinheit beliebig kombinierbar.

Die Schwingkreise müssen nicht zwangsläufig innerhalb eines Kreissegments angeordnet oder viereckig ausgebildet sein. Es ist auch denkbar sich entlang des Umfangs des Trägerkörpers verlaufende Schwingkreise, ähnlich zu der Erregerspule, vorzusehen. Ferner ist es auch denkbar eine um den vollen Kreisumfang verlaufenden Schwingkreis vorzusehen, wobei die Schwingkreise in unterschiedlichen Radien angeordnet sind. Die Anfangs- und Endpunkte der Schwingkreise können dabei aufweisen, wobei die Anfangs- und Endpunkte der Schwingkreise versetzt voneinander angeordnet sein, beispielsweise entlang der Kreisbahn winkelversetzt.

Es ist ferner möglich, den Drehwinkelsensor mit einer einfachen Schaltungsanordnung zu verwenden, die mit einer einzigen Wechselspannungsfrequenz betrieben wird. Des Weiteren ist die Auswerteeinheit 4 nicht auf das oben genannte Ausführungsbeispiel beschränkt, sondern kann durch weitere Auswerteelektronik ergänzt werden. Ferner können die Ausführungsbeispiele in einer einfachen Ausführung auch mit einer Wechselspannung in einer Frequenz realisiert werden.

**Patentansprüche**

1. Drehwinkelsensor (2) zum Erfassen der Position eines rotierenden Elements, insbesondere Rotors eines elektrischen Motors, aufweisend:

   - eine Erregerspule (20), welche mit einer Wechselspannung (U~) versorgt wird, um ein zur Wechselspannung (U~) korrespondierendes Erregerfeld zu erzeugen,
   - mindestens eine, vorzugsweise zwei, Empfangsspule (40a, 40b, 240a, 240b, 340a, 340b), die mit der Erregerspule (20) derart gekoppelt sind, so dass das Erregerfeld in den Empfangsspulen (40a, 40b, 240a, 240b, 340a, 340b) jeweils eine Spannung (Uout1, Uout2) induziert, und
   - ein Winkelgebereinheit (30), das mit dem rotierenden Element verbindbar ist und mittels dessen die Spannung der Empfangsspule (40a, 40b, 240a, 240b, 340a, 340b) beeinflussbar ist, **dadurch gekennzeichnet, dass** die Erregerspule (20) und die Empfangsspule (20, 40a, 40b, 240a, 240b, 340a, 340b) entlang eines Kreissegment angeordnet sind.

2. Drehwinkelsensor (2) nach Anspruch 1, **dadurch gekennzeichnet, dass** sich das Kreissegment im Wesentlichen über einen Winkel von etwa 360°/(2*n), insbesondere 45°, erstreckt, wobei n eine gerade Zahl ist.

3. Drehwinkelsensor (2) nach einem der vorstehenden Ansprüche, **dadurch gekennzeichnet, dass** jede Empfangsspule (40a, 40b, 240a, 240b, 340a, 340b) eine Wicklung (43a, 43b, 243a, 243b, 343a, 343b) aufweist, die einen periodischen Verlauf aufweist.

4. Drehwinkelsensor (2) nach Anspruch 3, **dadurch gekennzeichnet, dass** die Wicklung (43a, 43b, 243a, 243b, 343a, 343b) mehrere Wicklungsabschnitte aufweist, die jeweils ein von Wicklungsabschnitten eingegrenztes Messfeld (M1, M2) definieren.

5. Drehwinkelsensor (2) nach Anspruch 3 oder 4, **da-**

**durch gekennzeichnet, dass** die Messfelder (M1, M2) um einen gemeinsamen Rotationspunkt gleichmäßig beabstandet angeordnet sind.

6. Drehwinkelsensor (2) nach einem der Ansprüche 3 bis 5, **dadurch gekennzeichnet, dass** die Wicklung (43a, 43b, 243a, 243b, 343a, 343b) einen im Wesentlichen dreiecks- oder trapezförmigen Verlauf aufweist.

7. Drehwinkelsensor (2) nach einem der Ansprüche 3 bis 6, **dadurch gekennzeichnet, dass** jede Empfangsspule (40a, 40b, 240a, 240b, 340a, 340b) Wicklungsabschnitte (246a, 247a, 346a, 346b, 347a, 347b) aufweist, die in unterschiedlichen Ebenen (E1, E2) angeordnet sind.

8. Drehwinkelsensor (2) nach einem der Ansprüche 3 bis 7, **dadurch gekennzeichnet, dass** die Wicklungsabschnitte (246a, 247a, 346a, 346b, 347a, 347b) der Empfangsspulen (40a, 40b, 240a, 240b, 340a, 340b) im Wesentlichen gleichmäßig auf zwei Ebenen verteilt angeordnet sind.

9. Drehwinkelsensor (2) nach einem der vorstehenden Ansprüche, **dadurch gekennzeichnet, dass** die Erregerspule (20) und die Empfangsspulen (40a, 40b, 240a, 240b, 340a, 340b) auf einem Trägerkörper (70) angeordnet sind, der kreissegmentförmig ausgebildet ist.

10. Drehwinkelsensor (2) nach einem der vorstehenden Ansprüche, **dadurch gekennzeichnet, dass** die Winkelgebereinheit (30) einen elektronischen Schwingkreis mit mindestens einem kapazitiven (C) und mindestens einem induktiven Element (L) aufweist.

11. Drehwinkelsensor (2) nach einem der vorstehenden Ansprüche, **dadurch gekennzeichnet, dass** die Winkelgebereinheit (30) eine Vielzahl von Schwingkreisen (LC) aufweist.

12. Drehwinkelsensor (2) nach einem der vorstehenden Ansprüche, **dadurch gekennzeichnet, dass** die Anzahl m der Schwingkreise (LC) gleich

$$m = 360° / alpha$$

ist, wobei alpha der Winkel ist, über den sich das Kreissegment der Erregerspule (20) bzw. Empfangsspulen (40a, 40b, 240a, 240b, 340a, 340b) erstreckt.

13. Drehwinkelsensor (2) nach einem der Ansprüche 11 oder 12, **dadurch gekennzeichnet, dass** jeder Schwingkreis (LC) eine eigene Eigenfrequenz aufweist.

14. Drehwinkelsensor (2) nach einem der Ansprüche 11 bis 13, **dadurch gekennzeichnet, dass** die Erregerfrequenz in Abhängigkeit der Eigenfrequenz eines Schwingkreises (LC) oder eines der Schwingkreise (LC) festgelegt wird.

15. Drehwinkelsensor (2) nach einem der vorstehenden Ansprüche, **dadurch gekennzeichnet, dass** die Winkelgebereinheit (30) einen, vorzugsweise ringförmigen, Trägerkörper (31) aufweist und die Schwingkreise (LC) gleichmäßig um einen Rotationspunkt herum angeordnet sind.

Fig. 1

**Fig. 2**

**Fig. 3**

Fig. 4a

243a

240a

240b

243b                    248

Fig. 4b

243a                    246a

240a

247a

248

Fig. 5

30          LC

E1

d1    d2    248

247a    70    246a

E2                                247a    246a

248    249

Fig. 6

**Europäisches Patentamt**
**European Patent Office**
**Office européen des brevets**

Nummer der Anmeldung

EP 14 19 7736

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2005/098370 A1 (KSR INT CO [CA]; LEE JOONG K [CA]) 20. Oktober 2005 (2005-10-20) | 1-9 | INV. G01D5/20 |
| Y | * Spalte 3 - Spalte 7; Abbildungen 1-6 ,11 * ----- | 10-15 | |
| X | EP 0 182 085 A2 (KOLLMORGEN TECH CORP [US]) 28. Mai 1986 (1986-05-28) | 1-9 | |
| Y | * Zusammenfassung; Abbildungen 13,14 * ----- | 10-15 | |
| X | US 2005/270040 A1 (STRIDSBERG LENNART [SE]) 8. Dezember 2005 (2005-12-08) | 1-9 | |
| Y | * Zusammenfassung; Abbildung 61 * ----- | 10-15 | |
| Y,D | EP 1 828 722 B1 (HOWARD MARK ANTHONY [GB]) 2. November 2011 (2011-11-02) * das ganze Dokument * ----- | 10-15 | |

**RECHERCHIERTE SACHGEBIETE (IPC)**

G01D

Der vorliegende Recherchenbericht wurde für alle Patentansprüche erstellt

| Recherchenort | Abschlußdatum der Recherche | Prüfer |
|---|---|---|
| München | 23. April 2015 | Kallinger, Christian |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes
   Dokument

EPO FORM 1503 03.82 (P04C03)

# EP 2 884 238 A1

**ANHANG ZUM EUROPÄISCHEN RECHERCHENBERICHT**
**ÜBER DIE EUROPÄISCHE PATENTANMELDUNG NR.**

EP 14 19 7736

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-04-2015

| Im Recherchenbericht angeführtes Patentdokument | Datum der Veröffentlichung | Mitglied(er) der Patentfamilie | Datum der Veröffentlichung |
|---|---|---|---|
| WO 2005098370 A1 | 20-10-2005 | AU 2005229778 A1<br>BR PI0508793 A<br>CA 2561270 A1<br>EP 1738140 A1<br>JP 4809829 B2<br>JP 2007532872 A<br>KR 20070010053 A<br>US 2005225320 A1<br>WO 2005098370 A1 | 20-10-2005<br>04-09-2007<br>20-10-2005<br>03-01-2007<br>09-11-2011<br>15-11-2007<br>19-01-2007<br>13-10-2005<br>20-10-2005 |
| EP 0182085 A2 | 28-05-1986 | CA 1276037 C<br>DE 3585908 D1<br>EP 0182085 A2<br>GB 2167563 A<br>IE 55855 B1<br>US 4737698 A<br>US 4853604 A | 06-11-1990<br>27-05-1992<br>28-05-1986<br>29-05-1986<br>30-01-1991<br>12-04-1988<br>01-08-1989 |
| US 2005270040 A1 | 08-12-2005 | KEINE | |
| EP 1828722 B1 | 02-11-2011 | EP 1828722 A1<br>GB 2426065 A<br>WO 2006067420 A1 | 05-09-2007<br>15-11-2006<br>29-06-2006 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

*   EP 1828722 B1